# EUROPÄISCHE PATENTANMELDUNG

(11) **EP 2 030 843 A1**
(43) Veröffentlichungstag der Anmeldung: **04.03.2009**
(21) Anmeldenummer: 07016839.8
(22) Anmeldetag: 28.08.2007
(51) Int. Cl.: B60R 7/06

(54) **Justierbare Baugruppe**

(71) Anmelder: Delphi Technologies, Inc., Troy, Michigan 48007 (US)
(72) Erfinder: Ramaer, Norbert, 50171 Kerpen-Blatzheim (DE); Goepper, Uwe, 42283 Wuppertal (DE); Knappe, Timm, 51519 Odenthal (DE)
(74) Vertreter: Manitz, Finsterwald & Partner GbR

(57) **Zusammenfassung**

Die vorliegende Erfindung betrifft eine justierbare Baugruppe die einen Baugruppenkörper (14), zumindest einen ersten Lagerabschnitt (16,16') mit wenigstens einem Achsabschnitt (28), und zumindest eine Justiereinheit (22) umfasst. Der Achsabschnitt bildet zumindest einen Teil einer Drehachse, mittels derer die Baugruppe drehbar lagerbar ist. Der erste Lagerabschnitt und der Baugruppenkörper sind separate Bauteile, die über einen Schwenkzapfen (18) miteinander in Verbindung stehen, der an dem ersten Lagerabschnitt angeordnet ist. Die Justiereinheit ist dem ersten Lagerabschnitt zugeordnet und wirkt mit diesem zusammen, um die räumliche Lage des Achsabschnitts des ersten Lagerabschnitts relativ zu dem Baugruppenkörper zu justieren.

## Beschreibung

Die vorliegende Erfindung betrifft eine justierbare Baugruppe, die insbesondere im Innenraum eines Fahrzeugs zum Einsatz gelangen kann.

Bei der Montage von gegeneinander beweglichen Einheiten tritt häufig das Problem auf, dass die beiden Einheiten relativ zueinander nicht korrekt justiert sind. Wird beispielsweise in ein Armaturenbrett eines Fahrzeugs eine bewegliche Baugruppe, wie etwa ein Handschuhfach, eingebaut, so ist häufig zu beobachten, dass die Breite eines Spalts zwischen Armaturenbrettverkleidung und Handschuhfachdeckel variiert. Mit anderen Worten ist die Baugruppe relativ zu dem Armaturenbrett schief oder verdreht angeordnet. Infolgedessen verlaufen die Kanten der Verkleidung und des Deckels nicht parallel zueinander, so dass die einzelnen Spaltabschnitte V-förmig ausgebildet sind. Dies kann zum einen dazu führen, dass die Beweglichkeit der Baugruppe herabgesetzt ist, d.h. das Handschuhfach kann beispielsweise nicht ordnungsgemäß geöffnet oder geschlossen werden. Zum anderen sind ungleiche Spaltbreiten optisch sehr auffällig und hinterlassen bei einem Nutzer des Fahrzeugs den Eindruck einer mangelhaften Innenraumverarbeitung, was aufgrund gestiegener Kundenerwartungen nicht akzeptabel ist. Außerdem wird das Wohlbefinden der Fahrzeuginsassen durch eventuell auftretende Klappergeräusche beeinträchtigt.

Die Ursachen für die vorstehend beschriebenen Probleme sind zumeist Abweichungen von den vorgegebenen Abmessungen der Baugruppe - oder einiger ihrer Bestandteile - und/oder eine unsachgemäßen Montage, die Verformungen der Baugruppe nach sich zieht.

Bei Auftreten der genannten Probleme ist es bisher zumeist erforderlich, dass die Baugruppe und/oder das Bauteil, an dem sie montiert ist, ausgetauscht werden, da eine nachträgliche Korrektur der Lage der montierten Baugruppe nicht möglich oder zu aufwändig ist. Um diese Probleme im Vorfeld zu vermeiden, müssten die zulässigen Toleranzen bei der Herstellung der verwendeten Bauteile deutlich verringert werden und/oder aufwändigere Montagekonzepte angewandt werden, was beides zu erheblichen Mehrkosten führt.

Es ist daher Aufgabe der vorliegenden Erfindung, eine Baugruppe zu schaffen, die kostengünstig herstellbar, kompakt und einfach zu montieren ist. Gleichzeitig soll die Baugruppe auf einfache Weise justierbar sein, so dass die vorstehend genannten Probleme behoben werden können.

Diese Aufgabe wird durch eine justierbare Baugruppe mit den Merkmalen des Anspruchs 1 gelöst.

Die erfindungsgemäße Baugruppe umfasst einen Baugruppenkörper, zumindest einen ersten Lagerabschnitt mit wenigstens einem Achsabschnitt und zumindest eine Justiereinheit. Der Achsabschnitt bildet zumindest einen Teil einer Drehachse, mittels derer die Baugruppe drehbar lagerbar ist. Der erste Lagerabschnitt und der Baugruppenkörper sind separate Bauteile, die über einen Schwenkzapfen miteinander in Verbindung stehen, der an dem ersten Lagerabschnitt angeordnet ist. Die Justiereinheit ist dem ersten Lagerabschnitt zugeordnet und wirkt mit diesem zusammen, um die räumliche Lage des Achsabschnitts des ersten Lagerabschnitts relativ zu dem Baugruppenkörper zu justieren.

Mit anderen Worten kann durch die Justiereinheit die Ausrichtung des Achsabschnitts des ersten Lagerabschnitts relativ zu dem Baugruppenkörper verändert werden, wodurch die räumliche Lage der Drehachse der Baugruppe - d.h. deren Ausrichtung - beeinflusst wird. Dies hat zur Folge, dass sich die Lage der Baugruppe in einem montiertem Zustand, d.h. in einem Zustand in dem der Achsabschnitt in einer entsprechenden Lageröffnung eines anderen Bauteils gelagert ist, relativ zu dem anderen Bauteil, beispielsweise einer Armaturenbrettverkleidung, verändert. Bauteiltoleranzen und/oder Montageschäden können somit nach Einbau der Baugruppe durch eine Anpassung der Positionierung der Baugruppe ausgeglichen werden. Es kann auch vorgesehen sein, dass der Baugruppenkörper ein Achsabschnittselement umfasst - d.h. das Achsabschnittselement ist an dem Baugruppenkörper ausgebildet -, das in einer entsprechenden Lageröffnung des anderen Bauteils gelagert ist und das gemeinsam mit dem Achsabschnitt des Lagerabschnitts die Drehachse bildet. In vielen Fällen ist allerdings eine Lagerung der Baugruppe lediglich an dem Achsabschnitt des ersten Lagerabschnitts ausreichend.

Um eine einfache und zuverlässige Justierung zu ermöglichen, sind der erste Lagerabschnitt und der Baugruppenkörper getrennte Bauteile. Der erste Lagerabschnitt steht mit dem Baugruppenkörper nicht nur über die Justiereinheit in Kontakt, sondern ist auch über einen Schwenkzapfen mit diesem verbunden, wobei der Schwenkzapfen an dem ersten Lagerabschnitt angeordnet ist. Durch die Justiereinheit kann der Lagerabschnitt relativ zu dem Baugruppenkörper bewegt werden. Die möglichen Freiheitsgrade der Relativbewegung werden durch den Schwenkzapfen beschränkt. Eine Veränderung der Lage des Lagerabschnitts - und damit eine Justierung der Drehachsenorientierung - erfolgt somit durch ein Zusammenspiel des Schwenkzapfens mit der durch die Justiereinheit erzeugten Lageänderung des Lagerabschnitts, die beispielsweise ein Änderung eines Abstands des Lagerabschnitts von dem Baugruppenkörper umfasst.

Der Schwenkzapfen kann grundsätzlich auch anstatt an dem Lagerabschnitt an dem Baugruppenkörper angeordnet sein, um die Verbindung zwischen dem Baugruppenkörper und dem Lagerabschnitt auf die vorstehend beschriebene Weise herzustellen. Weiterhin kann der Achsabschnitt auch durch eine Aussparung ersetzt werden, die in dem Lagerabschnitt ausgebildet ist. In diesem Fall wird die Baugruppe an einem entsprechenden Zapfen drehbar gelagert, der an dem anderen Bauteil angeordnet ist und der in die Aussparung ragt. Eine Lageänderung der Aussparung führt somit ebenfalls zu einer Justierung der Lage der Baugruppe.

Die Funktionsweise der Baugruppe und die Wirkung der Justiereinheit verändern sich durch diese Abwandlungen nicht, weshalb derart ausgestaltete Baugruppen als gleichwertig mit der vorstehend beschriebenen Ausführungsform zu betrachten sind. Mit anderen Worten berühren diese Abwandlungen nicht das erfindungsgemäße Grundkonzept der vorliegenden justierbaren Baugruppe.

Die separate Ausbildung des Baugruppenkörpers und des Lagerabschnitts kann auch zu einer Vereinfachung der Montage der Baugruppe beitragen.

Den vorstehenden Ausführungen ist zu entnehmen, dass die erfindungsgemäße Baugruppe lediglich wenige Bauteile umfasst und auf einfache und zuverlässige Weise justierbar ist.

Vorteilhafte Ausführungsformen der Erfindung sind in den Unteransprüchen, der Beschreibung und den Zeichnungen angegeben.

Gemäß einer Ausführungsform der erfindungsgemäßen justierbaren Baugruppe umfasst diese einen zweiten Lagerabschnitt mit einem Achsabschnitt. Der zweite Lagerabschnitt und der Baugruppenkörper sind separate Bauteile, die über einen Schwenkzapfen miteinander in Verbindung stehen, der an dem zweiten Lagerabschnitt angeordnet ist. Die Baugruppe umfasst eine zweite Justiereinheit, die dem zweiten Lagerabschnitt zugeordnet ist und mit diesem zusammenwirkt, um die räumliche Lage des Achsabschnitts des zweiten Lagerabschnitts relativ zu dem Baugruppenkörper zu justieren.

Im Unterschied zu der vorstehend beschriebenen Ausführungsform weist diese Ausführungsform somit zwei Lagerabschnitte auf, die von dem Baugruppenkörper getrennt angeordnet sind und die durch ein Zusammenwirken der Schwenkzapfen und der entsprechenden Justiereinheit in Ihrer Lage beeinflusst werden können. Dadurch kann die Justierung der Baugruppe noch flexibler und einfacher gestaltet werden. Zudem können auch größere Lageabweichungen auf vorteilhafte Weise ausgeglichen werden. Gemäß einer besonders kostengünstigen Variante sind die beiden Lagerabschnitte und die entsprechenden Justiereinheiten im Wesentlichen identisch aufgebaut. Durch das Bereitstellen eines zweiten Lagerabschnitts und einer zweiten Justiereinheit ist es außerdem grundsätzlich möglich, verschiedene - insbesondere orthogonal zueinander angeordnete - Raumrichtungen bei der Justierung zu berücksichtigen, wobei dies eine entsprechende Anordnung und Aktuierungsrichtung der Justiereinheiten voraussetzt.

Auch bei dieser Ausführungsform kann - in Analogie zu den vorstehend bereits erläuterten Abwandlungen - anstelle des Schwenkzapfens an dem zweiten Lagerabschnitt ein Schwenkzapfen an dem Baugruppenkörper vorgesehen sein. Außerdem kann der Achsabschnitt des zweiten Lagerabschnitts durch eine Aussparung ersetzt werden. Diese Abwandlungen können sinngemäß auch bei den nachstehend beschriebenen Ausführungsformen berücksichtigt werden.

Es kann vorgesehen sein, dass der erste und der zweite Lagerabschnitt separate Bauteile sind. Eine derartige Ausgestaltung ermöglicht eine weitere Vereinfachung und Verbesserung der Justiermöglichkeiten und/oder der Montage der Baugruppe.

Bei einer Ausführungsform der Baugruppe mit zwei Lagerabschnitten ist es bevorzugt, wenn der Achsabschnitt des ersten Lagerabschnitts und der Achsabschnitt des zweiten Lagerabschnitts gemeinsam die Drehachse bilden. Mit anderen Worten ist die Baugruppe in diesem Fall an zwei justierbaren Achsabschnitten drehbar/verschwenkbar gelagert, was bei größeren Belastungen einen verbesserte Stabilität der Baugruppe sicherstellt und eine genauere Justierung ermöglicht.

Die Justiereinheit kann zumindest in einer Richtung senkrecht zu einer Längserstreckung des Achsenabschnitts des der Justiereinheit zugeordneten Lagerabschnitts wirken, um einen Abstand zwischen dem Baugruppenkörper und dem Lagerabschnitt zu variieren. Beispielsweise kann die Wirkungs- oder Aktuierungsrichtung der Justiereinheit in einer Ebene liegen, die parallel zu einer Frontalebene der Baugruppe angeordnet ist.

Gemäß einer weiteren Ausführungsform der erfindungsgemäßen Baugruppe bilden der Schwenkzapfen und eine an dem Baugruppenkörper angeordnete Schwenkzapfenöffnung ein Drehlager mit einer Drehlagerachse, um die der entsprechende Lagerabschnitt relativ zu dem Baugruppenkörper verschwenkbar ist, wobei der Lagerabschnitt insbesondere durch die Justiereinheit relativ zu dem Baugruppenkörper verschwenkbar ist. Ein derartiges Schwenklager ermöglicht eine einfache und zuverlässige Kontrolle der Relativbewegung des Lagerabschnitts relativ zu dem Baugruppenkörper.

Es ist bevorzugt, wenn eine Längsachse des Schwenkzapfens parallel zu einer Längserstreckung des Achsenabschnitts des entsprechenden Lagerabschnitts ist.

Bei einer weiteren Ausführungsform der erfindungsgemäßen Baugruppe umfasst die Justiereinheit einen Gewindeabschnitt und ist insbesondere durch eine Justierschraube gebildet. Grundsätzlich sind auch andere Justiermittel geeignet, wie etwa Keilelemente, um die Lage des Lagerabschnitts auf konstruktiv vorteilhafte Weise zu justieren.

Es kann vorgesehen sein, dass die Justiereinheit eine Fixiereinrichtung umfasst, mittels derer die räumliche Lage des entsprechenden Lagerabschnitts relativ zu dem Baugruppenkörper fixierbar ist.

Die Erfindung wird im Folgenden rein beispielhaft anhand vorteilhafter Ausführungsformen und unter Bezugnahme auf die Zeichnungen beschrieben. Es zeigen:
- Fig. 1: eine schematische Darstellung einer endmontierten Ausführungsform der erfindungsgemäßen justierbaren Baugruppe in einem geöffneten Zustand,
- Fig. 2: die Ausführungsform der justierbaren Baugruppe von Fig. 1 in einer Ansicht von schräg hinten in einem geschlossenen Zustand,
- Fig. 3: die Ausführungsform der justierbaren Baugruppe von Fig. 1 in einer Ansicht von vorne.

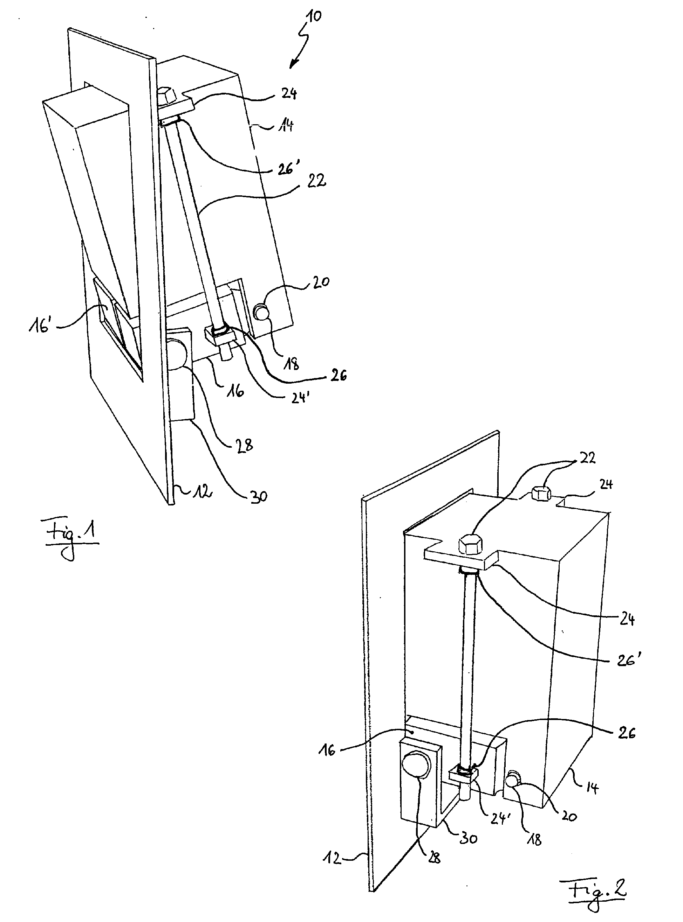

Fig. 1 zeigt eine Baugruppe 10, die an einer Platte 12 beweglich befestigt ist. Die Baugruppe 10 kann beispielsweise ein Ablagefach sein, das durch eine Schwenkbewegung geöffnet wird. Die Platte 12 versinnbildlicht in dem dargestellten Beispiel eine Konsole im Innenraum eines Fahrzeugs.

Die Baugruppe 10 umfasst einen Baugruppenkörper 14 und zwei Lagerabschnitte 16, 16'. Der Baugruppenkörper 14 und die Lagerabschnitte 16, 16' sind drei separate Bauteile. Da der - in einer frontalen Ansicht - rechte Teil der Baugruppe 10 dem linken Teil konstruktiv und funktionell im Wesentlich gleicht, wird im Folgenden lediglich auf den Aufbau des rechten Teils der Baugruppe 10 eingegangen.

Der Lagerabschnitt 16 weist einen Schwenkzapfen 18 auf, der in einer Schwenkzapfenöffnung 20 des Baugruppenkörpers 14 gelagert ist. Das durch den Schwenkzapfen 18 und die Schwenkzapfenöffnung 20 gebildete Drehlager ermöglicht das Verschwenken der Lagerabschnitte 16 relativ zu dem Baugruppenkörper 14 um eine Längsachse des Schwenkzapfens 18. Der Grad der Verschwenkung, d.h. der Winkel zwischen der Unterseite des Baugruppenkörpers 14 und der Oberseite des Lagerabschnitts 16, wird durch eine Justierschraube 22 festgelegt, die über eine Lasche 24 mit dem Baugruppenkörper 14 verbunden ist und über eine Lasche 24' mit dem Lagerabschnitt 16 verbunden ist.

Durch eine Drehung der Justierschraube 22 kann der Abstand zwischen den Laschen 24, 24' verändert werden, da die Justierschraube 22 in ihrem unteren Abschnitt mit einem Außengewinde versehen ist, das mit einem Innengewinde einer die Justierschraube 22 aufnehmenden Öffnung der Lasche 24' zusammenwirkt. Mit anderen Worten wird die Justierschraube 22 im Wesentlichen durch eine Gewindestange gebildet. Bei Erreichen einer korrekten Einstellung des Abstands der Laschen 24, 24' - wodurch die relative Lage des Lagerabschnitts 16 bezüglich des Baugruppenkörpers 14 eingestellt wird - wird der Zustand durch eine selbstsichernde Mutter 26 fixiert, die ein Teil der Lasche 24' ist. Die selbstsichernde Mutter 26 kann auch ein von der Lasche 24' separates Bauteil sein. Um ein unkontrolliertes Verrutschen der Justierschraube 22 zu verhindern, ist unterhalb der Lasche 24 eine Blechmutter 26' - eine sog. "speed nut" - angeordnet. Das Verrutschen kann auch durch eine Nut (nicht gezeigt) in der Justierschraube 22 und entsprechende Mittel an der Lasche 24 zuverlässig verhindert werden.

Eine alternative Ausführungsform der Fixierung der Lage des Lagerabschnitts 16 sieht vor, dass die Justierschraube 22 in Höhe der Lasche 24 mit einem Rechtsgewinde - oberes Außengewinde - versehen ist, das mit einem entsprechenden Innengewinde der Lasche 24 zusammenwirkt, während das untere Außengewinde ein Linksgewinde ist. Durch diese Bauweise kann die Lasche 24 ebenfalls gegenüber der Lasche 24' verspannt werden, was eine zuverlässige Sicherung des justierten Zustands ermöglicht.

Durch die Justierschraube 22 kann somit die relative Lage oder Ausrichtung des Lagerabschnitts 16 im Bezug auf den Baugruppenkörper 14 verändert werden, was eine Veränderung der räumlichen Lage eines Achsabschnitts 28 zur Folge hat, der an dem Lagerabschnitt 16 ausgebildet ist.

Der Achsabschnitt 28 ist in einer Halterung 30 der Platte 12 gelagert. An dem linken Lagerabschnitt 16' ist ebenfalls ein derartiger Achsabschnitt 28 ausgebildet (in Fig. 1 nicht zu erkennen).

Die beiden Achsabschnitte 28 der beiden Lagerabschnitte 16, 16' bilden zusammen eine Drehachse, um die sich die Baugruppe 10 drehen kann, d.h. um die die Baugruppe 10 gegenüber der Platte 12 verschwenkbar ist. Eine Veränderung der räumlichen Lage der Achsabschnitte 28 bewirkt, dass der Baugruppenkörper 14 seine räumliche Lage ebenfalls bezüglich einer Öffnung in der Platte 12 verändert. Dreht man beispielsweise lediglich die rechte Justierschraube 22 derart, dass der Lagerabschnitt 16 von dem Baugruppenkörper 14 weg bewegt wird, dann wird der Baugruppenkörper 14 in einer frontalen Ansicht nach links verkippt. Diese Verkippung kann zur Korrektur eines ungleichmäßig ausgebildeten Verlaufs des Spalts zwischen dem Baugruppenkörper 14 und dem Rand der Öffnung der Platte 12 genutzt werden. Mit anderen Worten können durch die Justierung auf einfache Weise Bauteiltoleranzen und/ oder Montageschäden ausgeglichen werden.

Es ist nicht zwingend notwendig, dass die Justierschraube 22 senkrecht zu der Drehachse und parallel zu der Frontalebene der Baugruppe 10 verläuft, da eine Justierung grundsätzlich auch mittels einer schräg verlaufenden Justierschraube 22 möglich ist.

Fig. 2 zeigt die in Fig. 1 gezeigten Komponenten in einer Sicht von schräg hinten, wobei sich die Baugruppe 10 in einem geschlossenem Zustand befindet. Fig. 2 ist zu entnehmen, dass die Justierschrauben 22 an beiden Seiten des Baugruppenkörpers 14 angeordnet sind, um die entsprechenden Lagerabschnitte 16, 16' justieren zu können.

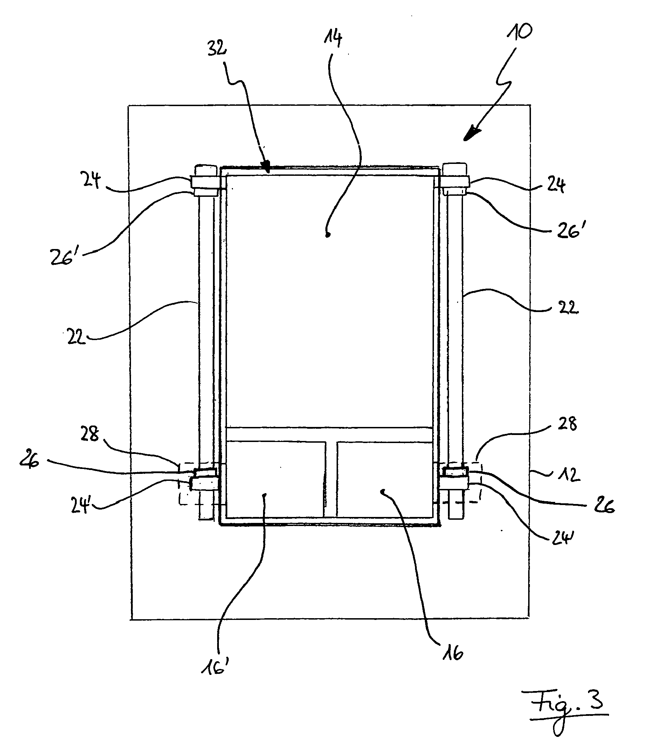

Fig. 3 zeigt eine frontale Ansicht der vorstehend beschriebenen Baugruppe 10, wobei auch Elemente gezeigt sind, die eigentlich durch die Platte 12 verdeckt sind. So sind die Justierschrauben 22 und die Laschen 24, 24' zu sehen, die dem Baugruppenkörper 14 bzw. den Lagerabschnitten 16, 16' zugeordnet sind. Die - in einer Richtung senkrecht zur Bildebene gesehen - vor den Laschen 24' liegenden Achsabschnitte 28 sind gestrichelt dargestellt. Aus Gründen der Übersichtlichkeit ist die Halterung 30 der Platte 12 nicht gezeigt.

In dem dargestellten Zustand ist der Baugruppenkörper 14 optimal in Bezug auf die Öffnung der Platte 12 ausgerichtet, d. h. ein Spalt 32 zwischen dem Baugruppenkörper 14 und der Öffnung der Platte 12 ist überall im Wesentlichen gleich breit. Dieser Zustand wurde durch eine geeignete Betätigung der Justierschrauben 22 an der rechten und der linken Seite des Baugruppenkörpers 14 erreicht. Mit anderen Worten kann durch eine Drehung der Justierschrauben 22 eine Verdrehung des Baugruppenkörpers 14 um eine Achse senkrecht zur Bildebene bewirkt werden, wenn die Justierschrauben 22 unterschiedlich betätigt werden. Eine Verschiebung des Baugruppenkörpers 14 in einer Längsrichtung - d.h. parallel zu den Längsachsen der Justierschrauben 22 - ergibt sich bei einer im Wesentlichen identischen Betätigung der Justierschrauben 22, d.h. wenn die Abstände zwischen den Laschen 24 und 24' an der rechten und der linken Seite des Baugruppenkörpers 14 in gleichem Maße verändert werden.

Grundsätzlich kann vorgesehen sein, dass nur eine Seite der Baugruppe 10 einen separaten Lagerabschnitt 16, 16' und die Justierschraube 22 aufweist. Dies kann vorteilhaft sein, wenn beispielsweise ein besonders einfacher Aufbau der Baugruppe 10 von vorrangigem Interesse ist und/oder wenn zu erwarten ist, dass nur geringe Fehler zu korrigieren sind. Der zweite Achsabschnitt 28, der zur Lagerung der Baugruppe 10 notwendig ist, kann dann direkt an dem Baugruppenkörper 14 ausgebildet sein. Ein eine weitere Vereinfachung der Baugruppe 10 kann darin bestehen, dass die Lagerung der Baugruppe 10 lediglich an einem einzigen justierbaren Achsabschnitt 28 erfolgt, wobei der vorstehend beschriebene "feste" Achsabschnitt 28 entfällt.

Es sind aber auch Ausführungsformen mit mehr als zwei Justiereinheiten möglich, beispielsweise um die Baugruppe 10 in weiteren Raumrichtungen justieren zu können. Insbesondere können Justiereinheiten vorgesehen sein, die in einem endmontierten Zustand eine Verkippung des Baugruppenkörpers 14 um Achsen ermöglichen, die in der Bildebene liegen.

Die vorstehend beschriebene Justiereinheit mit Justierschrauben 22 zeichnet sich durch ihre Effektivität und Kompaktheit aus. Zudem kann sie auch bei beengten Bauraumverhältnissen auf einfache Weise betätigt und fixiert werden.

### Bezugszeichenliste

- 10: Baugruppe
- 12: Platte
- 14: Baugruppenkörper
- 16, 16': Lagerabschnitt
- 18: Schwenkzapfen
- 20: Schwenkzapfenöffnung
- 22: Justierschraube
- 24, 24': Lasche
- 26: selbstsichernde Mutter
- 26': Blechmutter
- 28: Achsabschnitt
- 30: Halterung
- 32: Spalt

## Patentansprüche

1. Justierbare Baugruppe die einen Baugruppenkörper (14), zumindest einen ersten Lagerabschnitt (16, 16') mit wenigstens einem Achsabschnitt (28), und zumindest eine Justiereinheit (22) umfasst, wobei der Achsabschnitt (28) zumindest einen Teil einer Drehachse bildet, mittels derer die Baugruppe drehbar lagerbar ist, und wobei der erste Lagerabschnitt (16 oder 16') und der Baugruppenkörper (14) separate Bauteile sind, die über einen Schwenkzapfen (18) miteinander in Verbindung stehen, der an dem ersten Lagerabschnitt (16 oder 16') angeordnet ist, und wobei die Justiereinheit (22) dem ersten Lagerabschnitt (16 oder 16') zugeordnet ist und mit diesem zusammenwirkt, um die räumliche Lage des Achsabschnitts (28) des ersten Lagerabschnitts (16 oder 16') relativ zu dem Baugruppenkörper (14) zu justieren.

2. Justierbare Baugruppe nach Anspruch 1,
**dadurch gekennzeichnet, dass**
die Baugruppe einen zweiten Lagerabschnitt (16' bzw. 16) mit einem Achsabschnitt (28) umfasst, wobei der zweite Lagerabschnitt (16' bzw. 16) und der Baugruppenkörper (14) separate Bauteile sind, die über einen Schwenkzapfen (18) miteinander in Verbindung stehen, der an dem zweiten Lagerabschnitt (16' bzw. 16) angeordnet ist, und dass die Baugruppe eine zweite Justiereinheit (22) umfasst, wobei die zweite Justiereinheit (22) dem zweiten Lagerabschnitte (16' bzw. 16) zugeordnet ist und mit diesem zusammenwirkt, um die räumliche Lage des Achsabschnitts (28) des zweiten Lagerabschnitts (16' bzw. 16) relativ zu dem Baugruppenkörper (14) zu justieren.

3. Justierbare Baugruppe nach Anspruch 2,
**dadurch gekennzeichnet, dass**
der erste und der zweite Lagerabschnitt (16, 16') separate Bauteile sind.

4. Justierbare Baugruppe nach Anspruch 2 oder 3,
**dadurch gekennzeichnet, dass**
der Achsabschnitt (28) des ersten Lagerabschnitts (16 oder 16') und der Achsabschnitt (28) des zweiten Lagerabschnitts (16' bzw. 16) gemeinsam die Drehachse bilden.

5. Justierbare Baugruppe nach zumindest einem der vorstehenden Ansprüche,
**dadurch gekennzeichnet, dass**
die Justiereinheit (22) zumindest in einer Richtung senkrecht zu einer Längserstreckung des Achsabschnitts (28) des der Justiereinheit (22) zugeordneten Lagerabschnitts (16, 16') wirkt, um einen Abstand zwischen dem Baugruppenkörper (14) und dem Lagerabschnitt (16, 16') zu variieren.

6. Justierbare Baugruppe nach zumindest einem der vorstehenden Ansprüche,
**dadurch gekennzeichnet, dass**
der Schwenkzapfen (18) und eine an dem Baugruppenkörper (14) angeordnete Schwenkzapfenöffnung (20) ein Drehlager mit einer Drehlagerachse bilden, um die der entsprechende Lagerabschnitt (16, 16') relativ zu dem Baugruppenkörper (14) verschwenkbar ist.

7. Justierbare Baugruppe nach Anspruch 6,
**dadurch gekennzeichnet, dass**
der Lagerabschnitt (16, 16') durch die Justiereinheit (22) relativ zu dem Baugruppenkörper (14) verschwenkbar ist.

8. Justierbare Baugruppe nach zumindest einem der vorstehenden Ansprüche,
**dadurch gekennzeichnet, dass**
eine Längsachse des Schwenkzapfens (18) parallel zu einer Längserstreckung des Achsabschnitts (28) des entsprechenden Lagerabschnitts (16, 16') ist.

9. Justierbare Baugruppe nach zumindest einem der vorstehenden Ansprüche,
**dadurch gekennzeichnet, dass**
die Justiereinheit (22) zumindest einen Gewindeabschnitt umfasst, insbesondere durch eine Justierschraube gebildet ist.

10. Justierbare Baugruppe nach zumindest einem der vorstehenden Ansprüche,
**dadurch gekennzeichnet, dass**
die Justiereinheit (22) eine Fixiereinrichtung (26) umfasst, mittels derer die räumliche Lage des entsprechenden Lagerabschnitts (16, 16') relativ zu dem Baugruppenkörper (14) fixierbar ist.
